(19) **Europäisches Patentamt**

**European Patent Office**

**Office européen des brevets**

(11) **EP 0 876 762 B1**

(12) **EUROPEAN PATENT SPECIFICATION**

(45) Date of publication and mention
of the grant of the patent:
**07.08.2002 Bulletin 2002/32**

(51) Int Cl.⁷: **A01N 59/16**, C02F 1/72,
C02F 1/50
// (A01N59/16, 59:00)

(21) Application number: **98201444.1**

(22) Date of filing: **05.05.1998**

(54) **Composition having disinfecting action**

Zusammensetzung mit desinfizierender Wirkung

Composition à action désinfectante

(84) Designated Contracting States:
**AT BE CH CY DE DK ES FI FR GB GR IE IT LI LU
MC NL PT SE**

(30) Priority: **05.05.1997 NL 1005965**

(43) Date of publication of application:
**11.11.1998 Bulletin 1998/46**

(73) Proprietor: **Tevan B.V.**
**4200 AA Gorinchem (NL)**

(72) Inventor: **Bieze, Tammo Willem Nicolaas**
**4207 HE Gorinchem (NL)**

(74) Representative: **de Bruijn, Leendert C. et al**
**Nederlandsch Octrooibureau**
**P.O. Box 29720**
**2502 LS Den Haag (NL)**

(56) References cited:
**WO-A-91/08981**      **WO-A-96/18301**
**CH-A- 679 997**      **GB-A- 2 189 394**

## Description

The invention relates to a composition having disinfecting action based on hydrogen peroxide and silver.

Such compositions are known. Thus, DE-C-36 45 266 describes a disinfectant which is composed of silver, an inorganic acid, an organic stabilizer and hydrogen peroxide, to which gelatine can also optionally be added. Gelatine is added, in particular, with those applications in which the agent is exposed for a fairly long time to ultraviolet radiation, such as, for example, is the case when it is used in open-air swimming pools. The silver concentration in the disinfectant is 0.05 to 0.1% by weight (wt.%), which is equivalent to 500 to 1000 parts by weight per million (parts per million, ppm). The amount of inorganic acid should be at least equimolar with respect to the amount of silver present. The dosage of the agent when used as disinfectant in water treatment, that is to say, for example, in swimming-pool water or drinking water, is 10-75 ppm (or approximately 10-75 mg per litre of water), while the dosage in the case of surface disinfection is 0.1 to 2.0% by weight (or 1 to 20 g per litre).

Moreover, WO-A-96/18301 discloses a disinfectant which comprises at most 60 wt.% $H_2O_2$, a mixture of organic acids $RCO_3H/RCO_2H$ (R is methyl or ethyl), a silver component, a stabilizer and water. The silver component is a source of $Ag^+$ and is present in a quantity such that the silver compound:$H_2O_2$ weight ratio is 0.0005:1 to 0.015:1. For an $H_2O_2$ content of 50 wt. % and $AgNO_3$ as silver component, this is equivalent to 160-4760 ppm of Ag. Inorganic acids (preferably phosphoric acid) are suitable as stabilizer.

The known disinfectants based on silver and hydrogen peroxide have the disadvantage that the silver concentration in the agent is relatively high. Apart from the fact that this is undesirable from the point of view of costs, it also has the side effect when used, for example, in swimming pools that black spots may appear on tile material or plastic components (overflow channels, movable floors or pool lining). These spots, which are the consequence of the precipitation of silver compounds which are sparingly soluble in water, such as, for example, silver oxide, are usually difficult to remove.

In addition, it has been found that a relatively large fraction of the silver is retained by the filter of a swimming pool. As a result, the filter and the environment are polluted since the filter has to be disposed of as chemical waste.

The addition of gelatine to a disinfectant for swimming pools is also undesirable because it has been found that the addition of gelatine has a negative effect on the chemical activity of dissolved silver ions as a result of the occurrence of physical polyelectrolyte-ion interactions. As a result, fewer silver ions are available for disinfection. Furthermore, gelatine constitutes an additional organic pollution for the water.

The fact that the drinking-water standard for silver is usually fixed at a few tens of parts by weight per billion (parts per billion, pbb) is an important consideration when disinfecting drinking water. In the Netherlands, for example, this standard is 10 ppb so that the use of disinfectants having a silver concentration in the order of magnitude of a few hundred ppm in the standard dosage will quite quickly result in said drinking-water standard being exceeded.

As regards the use of aggressive inorganic acids, such as phosphoric acid and nitric acid, caution is called for in the preparation of the disinfectant and effective safety measures should be taken. In addition, the use of such acids in the large amounts hitherto proposed has the consequence that the pH of the silver concentrate initially prepared is very low, and therefore the necessary safety measures should be observed when the hydrogen peroxide is added to produce the final disinfectant.

Surprisingly, it has now been found that an excellent disinfecting action can in fact be obtained with the composition based on hydrogen peroxide according to the invention, which contains a very low concentration of silver and a very low concentration of inorganic acid.

The invention therefore relates to a composition having disinfecting action comprising:

(a) 35-75 wt.%, preferably 45-55 wt.%, of hydrogen peroxide
(b) 10-150 ppm of silver
(c) 1-100 ppm of inorganic acid
(d) 0-100 ppm of organic stabilizer, and
(e) 25-65 wt.%, preferably 45-55 wt.% of water,

wherein the inorganic acid:silver molar ratio is less than 1.

The disinfecting composition according to the present invention eliminates the abovementioned disadvantages. This composition has, moreover, the advantage that it is very stable during storage. Thus, under usual conditions, the loss of hydrogen peroxide is only 1 to 2%.

Both organic and inorganic silver compounds can be used as silver component. Examples of organic silver compounds are silver benzoate, silver citrate and silver lactate. Preferably, however, inorganic silver salts, such as silver nitrate, silver sulphate and the sodium/silver chloride complex $AgNaCl_2$ are used. Particularly preferred is the use of silver nitrate. Optionally, colloidal silver may also be used, but this is not preferred. The silver is therefore preferably present in the composition as the free ion Ag'.

The amount of silver present in the composition according to the invention is based on the amount of Ag or Ag' present. This amount is 10-150 ppm, but preferably the amount of silver is only 20-100 ppm. A silver concentration of 30-60 ppm is very suitable. Compared with the hydrogen peroxide $H_2O_2$, the silver is

preferably present in an Ag:$H_2O_2$ weight ratio of 1:5000 to 1:50,000, while a weight ratio of 1:7500 to 1:15,000 is particularly preferred.

Suitable as inorganic acids are, in particular, those acids which have an adequate stabilizing action on the silver compound present. Suitable acids arc therefore aqueous solutions of phosphoric acid, nitric acid and boric acid. Preferably, however, an aqueous solution of phosphoric acid is used.

According to the invention, the inorganic acid is used in an amount of 1-100 ppm, preferably 1-50 ppm, while an amount of 2-25 ppm is particularly preferred. In this connection, it is, however, important that the number of moles of the inorganic acid is lower than the number of moles of Ag which is present in the composition. Surprisingly, it has been found that this has a favourable effect on the disinfecting action of the composition according to the invention.

The composition according to the invention may, moreover, contain one or more organic stabilizers, likewise for stabilizing the silver compound. Suitable organic stabilizers are reported for example, in NL-A-8700749. Organic stabilizers which are preferred are citric acid, tartaric acid and mixtures thereof. The total amount of organic stabilizer is usually 0-100 ppm, preferably 5-50 ppm.

The composition according to the invention can be prepared in a manner known per se, such as is described, for example, in NL-A-8700749, the amounts of the various components of course being adapted to the amounts of said components in the composition according to the invention. A very suitable method of preparing the composition according to the invention comprises the following steps:

(a) mixing the inorganic acid with water, preferably demineralized or distilled water,
(b) adding a silver compound to this solution,
(c) then adding, if desired, an organic stabilizer, and
(d) adding a solution of hydrogen peroxide in water (for example 35-50 wt.% $H_2O_2$) to the mixture thus obtained,

wherein the amounts of inorganic acid, silver compound, organic stabilizer and hydrogen peroxide are such that the final concentrations are within the limits specified for the composition according to the invention.

The composition according to the invention can be used both for water treatment and for surface disinfection. In this connection, the term "water treatment" refers to the disinfection and/or conditioning of swimming-pool water, process water and drinking water. Process water is water which is used in (industrial) processes, such as, for example, cooling water and water in pasteurizers. The disinfection of drinking water is possible because, with the standard dosage, the silver concentration will not be above the drinking-water standard. The composition according to the invention is, however, very suitable, in particular, for disinfecting and conditioning swimming-pool water.

In addition, the composition according to the invention can be used for so-called surface disinfection. This may refer, for example, to the disinfecting of floors and (household) utensils, instruments, pipe systems, equipment and apparatus used in the sport and recreation sector, the foodstuffs industry, the hotel and catering industry, the pharmaceutical industry, the agricultural sector, intensive cattle breeding and housekeeping.

In the case of use as disinfectant for water treatment, the dosage of the composition according to the invention will usually have standard values, that is to say, between 10 and 200 mg of disinfectant per litre of water, preferably between 50 and 150 mg per litre of water. When used for surface disinfection, the dosage may optionally be higher as the action time is limited. A dosage of up to 50 g of disinfectant per litre of water can be employed, but this is to some extent dependent on the surface to be disinfected, the residual contamination and the microorganisms to be killed. Preferably, however, a dosage of at most 10 g per litre of water is employed.

The invention is illustrated further by reference to the examples below.

Example 1

In a swimming pool (circulation system with sand filter) having a circulation time of 3 hours, i.e. all the water in the swimming pool is fed through the filter in 3 hours, disinfectant was added for one and a half years in an amount such that the hydrogen peroxide content was constant at approximately 25 mg per litre of swimming-pool water (mg/l). This was equivalent to a dosage of the disinfectant of 50 mg/l. The pH of the swimming-pool water varied between 6.8 and 7.2 for a pool temperature of 20 to 30°C. The make-up water met the drinking-water standard.

The disinfectant had the following composition:

50 ppm of silver as $Ag^+$,
50 wt.% of $H_2O_2$,
8 ppm of phosphoric acid,
30 ppm of tartaric acid and citric acid, and
up to 100 wt.% of water.

The occupation of the swimming pool was typical for a normal public swimming pool. The normalized pool loading, expressed as

$$I = \frac{\text{bathers} * \text{circulation time m}^{-3}}{\text{volume of the pool}},$$

was 0.05 to 0.18, whereas this value is usually 0.05 to 0.2. In this connection, the number of bathers (per hour) is derived from the annual number of bathers, the circulation time is expressed in hours and the volume of the pool is expressed in m³.

Samples of the swimming-pool water were taken weekly for one and a half years. The bacterial count of said samples was generally determined by placing the water sample from the swimming pool on an agar tray and determining the number of colony-forming units (CFUs) at 22°C and at 37°C. As regards the CFUs, the European standard for swimming-pool water is 100 CFU/100 ml.

It was found that during the one and a half years the number of CFUs in the swimming-pool water was not above 100 CFU/100 ml either at 22°C or at 37°C.

Example 2

The microbiological quality was examined on a two-weekly basis in a swimming pool (capacity 880 m³) having a pumping capacity of 150 m³ per hour and a loading I (average) of 0.1-0.2 (see Example 1) for six months. The circulation system incorporated a bidirectional flow filter. The disinfectant according to Example 1 was added in a dosage of 50-70 ppm. The pH was 7.0-7.3. The temperature was 28°C.

In this experiment it was found that, under these conditions, hygienic swimming-pool water can be produced with the disinfecting composition according to the invention.

**Claims**

1. A composition having disinfecting action comprising:

    (a) 35-75 wt.% of hydrogen peroxide
    (b) 10-150 ppm of silver
    (c) 1-100 ppm of inorganic acid
    (d) 0-100 ppm of organic stabilizer, and
    (e) 25-65 wt.% of water,

    wherein the inorganic acid:silver molar ratio is less than 1.

2. Composition according to Claim 1, wherein silver is present in an amount of 30-60 ppm.

3. Composition according to Claim 1 or 2, wherein the inorganic acid is present in an amount of 2-25 ppm.

4. Composition according to one or more of the preceding claims, wherein silver is present as Ag'.

5. Composition according to one or more of the preceding claims, wherein the inorganic acid is phosphoric acid.

6. Composition according to one or more of the preceding claims, wherein the organic stabilizer is tartaric acid and/or citric acid.

7. Method of preparing a composition according to one or more of Claims 1-6, which method comprises the following steps:

    (a) mixing the inorganic acid with water, preferably demineralized or distilled water,
    (b) adding a silver compound to this solution,
    (c) then adding, if desired, an organic stabilizer, and
    (d) adding a solution of hydrogen peroxide in water (for example 35-50 wt.% $H_2O_2$) to the mixture thus obtained,

    wherein the amounts of inorganic acid, silver compound, organic stabilizer and hydrogen peroxide are such that the final concentrations are within the limits specified in Claim 1.

8. Use of a composition according to one or more of Claims 1-6 as disinfectant.

9. Use according to Claim 8 for disinfecting swimming-pool water.

**Patentansprüche**

1. Zusammensetzung mit desinfizierender Wirkung, umfassend:

    (a) 35-75 Gew.-% Wasserstoffperoxid

    (b) 10-150 ppm Silber

    (c) 1-100 ppm anorganische Säure

    (d) 0-100 ppm organischer Stabilisator und

    (e) 25-65 Gew.-% Wasser,

    wobei das molare Verhältnis von anorganischer Säure:Silber niedriger als 1 ist.

2. Zusammensetzung nach Anspruch 1, **dadurch gekennzeichnet, daß** Silber in einer Menge von 30-60 ppm vorliegt.

3. Zusammensetzung nach Anspruch 1 oder 2, **dadurch gekennzeichnet, daß** die anorganische Säure in einer Menge von 2-25 ppm vorliegt.

4. Zusammensetzung nach einem der vorangehenden Ansprüche, **dadurch gekennzeichnet, daß** Silber als $Ag^+$ vorliegt.

**5.** Zusammensetzung nach einem der vorangehenden Ansprüche, **dadurch gekennzeichnet, daß** die anorganische Säure Phosphorsäure ist.

**6.** Zusammensetzung nach einem der vorangehenden Ansprüche, **dadurch gekennzeichnet, daß** der organische Stabilisator Weinsäure und/oder Zitronensäure ist.

**7.** Verfahren zur Herstellung einer Zusammensetzung nach einem oder mehreren der Ansprüche 1 bis 6, wobei das Verfahren die folgenden Schritte umfaßt:

(a) Mischen der anorganischen Säure mit Wasser, vorzugsweise entmineralisiertem oder destilliertem Wasser,

(b) Zusetzen einer Silberverbindung zu dieser Lösung,

(c) anschließend Zusetzen, falls gewünscht, eines organischen Stabilisators und

(d) Zusetzen einer Lösung von Wasserstoffperoxid in Wasser (z.B. 35-50 Gew.-% $H_2O_2$) zur so erhaltenen Mischung,

wobei die Mengen an anorganischer Säure, Silberverbindung, organischen Stabilisator und Wasserstoffperoxid derart sind, daß die Endkonzentrationen innerhalb der in Anspruch 1 spezifizierten Grenze liegen.

**8.** Verwendung einer Zusammensetzung nach einem oder mehreren der Ansprüche 1-6 als Desinfektionsmittel.

**9.** Verwendung nach Anspruch 8 zum Desinfizieren von Schwimmbadwasser.

## Revendications

**1.** Composition ayant une action désinfectante comprenant :

(a) 35-75 % en poids de peroxyde d'hydrogène
(b) 10-150 ppm d'argent
(c) 1-100 ppm d'acide inorganique
(d) 0-100 ppm de stabilisant organique, et
(e) 25-65 % en poids d'eau,

dans laquelle le rapport molaire acide inorganique : argent est inférieur à 1.

**2.** Composition selon la revendication 1, dans laquelle de l'argent est présent en une quantité de 30-60 ppm.

**3.** Composition selon la revendication 1 ou 2, dans laquelle l'acide inorganique est présent en une quantité de 2-25 ppm.

**4.** Composition selon une ou plusieurs des revendications précédentes, dans laquelle l'argent est présent sous la forme $Ag^+$.

**5.** Composition selon une ou plusieurs des revendications précédentes, dans laquelle l'acide inorganique est l'acide phosphorique.

**6.** Composition selon une ou plusieurs des revendications précédentes, dans laquelle le stabilisant organique est l'acide tartrique et/ou l'acide citrique.

**7.** Procédé de préparation d'une composition selon une ou plusieurs des revendications 1-6, lequel procédé comprend les étapes suivantes :

(a) mélanger l'acide inorganique avec de l'eau, de préférence de l'eau déminéralisée ou distillée,
(b) ajouter un composé d'argent à cette solution,
(c) ensuite ajouter, si désiré, un stabilisant organique, et
(d) ajouter une solution de peroxyde d'hydrogène dans l'eau (par exemple 35-50 % en poids $H_2O_2$) au mélange ainsi obtenu,

dans lequel les quantités d'acide inorganique, de composé d'argent, de stabilisant organique et de peroxyde d'hydrogène sont telles que les concentrations finales soient dans les limites spécifiées à la revendication 1.

**8.** Utilisation d'une composition selon une ou plusieurs des revendications 1-6 comme désinfectant.

**9.** Utilisation selon la revendication 8 pour désinfecter de l'eau de piscine.